# EUROPEAN PATENT SPECIFICATION

(11) **EP 4 067 679 B1**
(45) Date of publication and mention of the grant of the patent: **21.08.2024**
(21) Application number: 21166538.5
(22) Date of filing: 01.04.2021
(51) Int. Cl.: F16B 37/14, F16B 33/00, F16B 43/02, F16J 3/04

(54) **COVER FOR FASTENING SCREW, FASTENING SCREW**
ABDECKUNG FÜR BEFESTIGUNGSSCHRAUBE, BEFESTIGUNGSSCHRAUBE
COUVERCLE POUR VIS DE FIXATION, VIS DE FIXATION

(43) Date of publication of application: 05.10.2022
(73) Proprietor: VOLKSWAGEN AG, 38440 Wolfsburg (DE)
(72) Inventor: LÜCKE, Michael, 29396 Schönewörde (DE)

(56) References cited:
- DE-A1- 10 010 611
- DE-B4- 102005 052 309
- JP-U- S5 141 061
- US-A- 4 490 083

## Description

The present invention pertains to a cover for a fastening screw which comprises a screw head and a threaded shaft extending axially from the screw head, the cover comprises a receptacle end for accommodating the screw head in a form fitting manner and an elastically deformable adjustment element that extends at least axially from the receptacle.

Furthermore, the present invention concerns a fastening screw which may be used to fasten at least two objects to one another by applying a pressing force to the objects, comprising a screw head and a threaded shaft extending axially from the screw head, whereby a cover with an elastically deformable adjustment element is attached to the screw head it in a form-fitting manner.

Fastening screws are commonly used to attach otherwise lose objects to one another. A fastening screw usually comprises a screw head which may be used for interaction with a tool used by a user. For that purpose the screw head may comprise a circumference that deviates from a circle such as a hexagon screw, or it may comprise an axial recess in the form of a slit (slotted screw), a cross (cross recess screw) or an internal hexagon, for example. Furthermore, a fastening screw usually comprises a threaded shaft that extends from the screw head and which is designed such that it may be screwed into a winding or counter winding that is arranged in or on one of the two elements to be attached to one another. Usually, a first object comprises an opening through which the shaft may be axially pushed through and a second object of two objects comprises the winding - either directly in the second object or on the second object, for example as screw nut - such that the shaft is pushed through the first object first and then screwed into the counter-winding of the second objects such that the screw head comes to rest on the first object, thereby pushing or pressing the first object against the second object such that between the two objects the frictional forces increase up to the point where the two objects of fixedly attached to one another.

In environments where humidity or fluids are expected to reach the screw connection and in particular where the screw itself and in particular where the elements to be connected are made of different materials corrosion may occur. In order to avoid corrosion it is known to provide a cover to the screw which seals the screw connection from the environment.

Known covers of that kind are designed such that they may be pushed onto the screw head with a receptacle end from which an elastically deformable element protrudes at least in axial direction. Known covers comprise a elastically deformable ring as adjustment element that also protrudes radially from the receptacle such that the cover obtains a hat like structure or form. The deformable ring is designed to touch contact the first object when the screw head comes close to the first object such that the deformable ring is axially deformed when the screw is screwed in further thereby providing a preload acting from the screw head through the adjustment element onto the first object to provide a reliable seal between the cover and the first object. This seal prohibits fluids or humid air to reach the actual screw connection and thereby prohibits corrosion and entry of fluids through the screw connection.

A known cover is described, for example, in the application JP S51 41061 U. That cover comprises a tubular bellow on its free end to compensate length deviations. Similar covers are disclosed by DE 100 106 11 A1 and US 4,490,083 A.

Due to new designs and more complex surfaces of objects that are to be connected with one another the known design of the cover can reach its limits. It is therefore an object of the present invention to provide a cover for fastening screws that is more versatile and adjustable to different and complex designs of objects than previously known covers while guaranteeing a highly functional seal for a screw connection and an easy assembly.

The object of the present invention is obtained with a cover for fastening screws that comprises the features of claim 1.

The adjustment element of the inventive cover is designed as a tubular bellows. The tubular bellows extends at least axially from the receptacle end and thus in the direction of the shaft of the screw during use. In contrast to the formally known hat shaped adjustment element, the cover with the tubular bellows allows for a much further axial deformation while still providing a safe seal to the object against which the adjustment element is axially pressed (for example the first object). The tubular bellows is also called gaiter or boot and it is often used in vehicles to protect a moving part such as a suspension or telescopic arm. It allows for a large axial deformation so that it provides the possibility to adapt or to adjust also to a surface of an object that extends in a plane which is not perpendicular oriented to the axial direction of the screw or a screw hole or winding. With the tubular bellows it is possible to provide a seal for example on an object or element that comprises a surface that is inclined to the axial direction of a screw hole or screw axis of even more than 10°, for example in particular more than 40° to the perpendicular orientation. The surface in question is understood as the surface that surrounds the screw hole or winding of the object into which the screw is to be screwed into.

The tubular bellows comprises a sealing ring on its free end distant to the receptacle end for touch contacting an object to be fastened by the fastening screw. The sealing ring helps to establish a safe touch connection of the bellows with the object around the whole circumference of the free end of the tubular bellows. The sealing ring helps to safely seal the area around the screw and the screw hole from its surroundings. It is in particular preferable that the sealing ring is at least partially elastically deformable, so that it is easily adjustable to the surface to be touched. Preferably, the sealing ring is sufficiently stiff in a way that it maintains its ring shape during use. For example, the sealing ring comprises a stiff support ring onto which a sealing lip that is elastically deformable and designed for touch contacting the object is arranged. In particular, the sealing lip and the support ring are made in one piece. The sealing lip preferably extends radially and axially from the support ring.

According to the invention, the receptacle end comprises a cavity for receiving the screw head, the cavity comprises a bottom wall with a central opening through which the threaded shaft of the screw is guidable or pushable. For mounting purposes, the screw may therefore be arranged with its screw head in the cavity of the receptacle end. Thereby, the form fitting connection between the screw head and the receptacle end is provided and the cover is safely mounted to the screw head. The cavity is preferably designed such that it encloses the screw head radially (or circumferentially) and axially such that the screw head is safely secured within the cavity of the receptacle.

The tubular bellows extends from the bottom wall away from the cavity such that on one side of the bottom wall the bellows extends and on the other side of the bottom wall the cavity is arranged. In that way, the tubular bellows safely surrounds the screw shaft while the screw head is safely arranged in the cavity.

According to a preferable embodiment of the invention the tubular bellows extends coaxially to the central opening from the bottom wall. Thereby the coaxial arrangement of the tubular bellows to the threaded shaft, if the cover is already mounted to the screw head, is guaranteed. The coaxial arrangement has the advantage that the tubular bellows may be bent and folded into different directions originating from the same distance from the threaded shaft of the screw, such that in all directions the bellows may be deformed in the same way or at least in the same extent from its original undeformed or untensed state.

It is in particular provided that the tubular bellows forms a border of the central opening. The central opening thus opens directly into the tubular bellows and the tubular bellows comprises a diameter at its end at the bottom wall that is equal to the diameter of the central opening of the bottom wall. This allows for an easy manufacturing process and a reliable cover.

It is particularly preferred that the tubular bellows is designed in one piece with the receptacle. Therefore, the cover is overall designed in one piece and may be manufactured in a cost-efficient manufacturing process. The cover is preferably made of a plastic, rubber and/or elastomeric material and may be manufactured by injection moulding, for example.

It is furthermore provided that the bellows preferably extends in its untensed state perpendicular from the bottom wall such that an easy arrangement of the screw within the cover is ensured. The first surface of the bottom wall facing the tubular bellows and the second surface of the bottom wall facing the cavity are preferably arranged parallel to one another such that the perpendicular extension of the tubular bellows from the bottom wall benefits the arrangement of the screw which is arranged with the screw head in the cavity with one surface of the screw head lying on the second surface of the bottom wall which faces then the cavity.

According to a preferred embodiment of the present invention, the tubular bellows comprises at least two, preferably at least three folding lines that extend in circumferential direction of the bellows. The number of folding lines defines the elasticity and deformability of the tubular bellows in all dimensions during use. At least two, preferably at least three folding lines guarantee for most intended use cases a sufficient deformability of the adjustment element for providing the intended sealing function.

Optionally, at least one of the two folding lines extends in a threaded manner. Depending on its inclination or slope, this folding line may provide two or more windings around the tubular bellows allowing for a high deformability. This at least one folding line thus winds along the tubular bellows such that the tubular bellows may - according to a further embodiment of the invention - also comprise only this one folding line.

It is furthermore provided that the cavity of the receptacle end preferably comprises a lid wall that extends parallel to the bottom wall so that the screw head may be hold in axial direction between the lid wall and the bottom wall. In this case, the screw head is safely arranged between the lid wall and the bottom wall such that an unwanted loosening of the cover from the screw is safely prohibited. The screw head in its mounted state is thus fully or partially enclosed by the receptacle end of the cover.

Preferably, the lid wall comprises a central opening through which the screw head is pushable by elastic deformation of the receptacle end, in particular of the lid wall. The accordingly designed cover allows a screw to be mounted to the cover or the cover to be mounted to the screw in a way that the screw is pushed through the central opening firstly with the threaded shaft which then also passes through the central opening of the bottom wall and subsequently the screw head is pushed through the central opening of the lid wall under elastic deformation of the lid wall such that when the screw head is fully arranged within the cavity of the receptacle end, the lid wall reaches behind the screw head to axially fixate the screw head in the cavity of the receptacle end.

According to an alternative embodiment of the present invention, the lid wall is preferably closed (without a central or any other opening) and the central opening of the bottom wall is designed such that the screw head may be pushed through the central opening of the bottom wall into the cavity under elastic deformation of the bottom wall. In this case, the mounting direction of the screw to the cover is reversed such that the screw is to be mounted from the side of the bellows. In both cases the screw head may be safely arranged within the cavity. The elasticity of the bottom wall and/or lid wall of the receptacle end allows for an easy mounting of the cover on the screw head of a screw in either way. In this case, the bellows is appropriately designed such that the screw head may be pushed through the bellows so that is may reach the cavity through the central opening of the bottom wall. For example, the bellows is designed elastically deformable such that it may be widened by the screw head sufficiently far when it is pushed through the bellows.

The inventive fastening screw of claim 11 is provided with the inventive cover as explained in details above. The aforementioned advantages of the cover are of course also valid for the fastening screw with the cover.

The fastening screw is preferably designed such that a tubular bellows extends from the receptacle end coaxially to the threaded shaft of the fastening screw at least partially in the longitudinal extension of the threaded shaft. By doing so, the tubular bellows encloses the threaded shaft circumferentially and ensures a sealing function during use.

Further advantages and preferred features and combination of features of the inventive fastening screw and the cover result in particular from the description above as well as from the claims. In the following the present invention will be explained in more detail with reference to the drawings. The drawings show in
- Figure 1: a fastening screw in a perspective view, in
- Figure 2: the fastening screw in a longitudinal cross-section review and in
- Figure 3: the fastening screw in the longitudinal cross-section view during use.

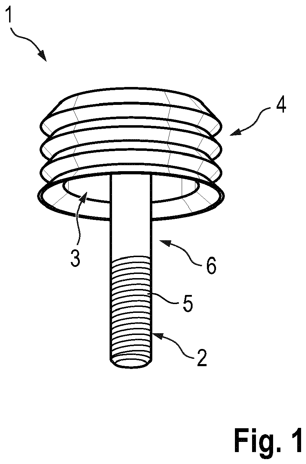

Figure 1 shows an advantageous fastening screw 1 in a perspective view. The fastening screw 1 comprises a threaded shaft 2 and a screw head 3 which is hidden under a cover 4 of the fastening screw 1. The threaded shaft 2 comprises a winding 5 that starts at the free end of the threaded shaft 2 and extends up to about half of the longitudinal extension of the threaded shaft 2 such that a longitudinal section of the threaded shaft 2 remains which does comprise a flat or threadless mantel wall of the shaft 2. The winding 5 is designed such that the fastening screw 1 may be screwed into a counter winding of an object as will be explained further below. The screw head 3 and the threaded shaft 2 form a screw body 6 of the fastening screw 1. The screw head 3 and the threaded shaft 2 are formed in one piece.

The cover 4 is made of a plastic, elastomeric or rubber material and designed in one piece. It is attached to the screw head 3 in a formfitting manner such that it is firmly fixed to the screw body 6.

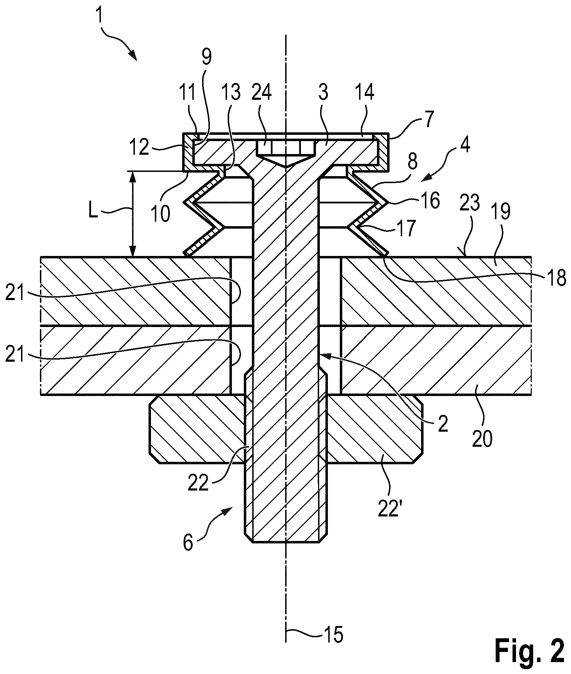

Figure 2 shows a longitudinal cross section view of the fastening screw 1 of figure 1. The cover 4 comprises a receptacle end 7 and a tubular bellows 8 that extends axially from the receptacle end 7.

The receptacle end 7 comprises a cavity 9 in which the screw head 3 is arranged. Presently, the dimensions of the screw head 3 and of the cavity or the receptacle end 7 are designed such that the screw head 3 is enclosed by the receptacle end 7 with none or with only minimal play. The screw head 3 is therefore safely secured in the cavity 9 or in other words the cover 4 is firmly secured on the screw head 3 such that a relative movement between the screw head 3 and the cover 4 is prohibited or at least essentially prohibited.

The receptacle end 7 comprises a bottom wall 10, a lid wall 11 that is arranged distant and parallel to the bottom wall 10 and a side wall 12 that extends in a circular manner along the outer circumference of the bottom wall 10 and the lid wall 11 such that the bottom wall 10, the lid wall 11 and the side wall 12 enclose or define the cavity 9. The height of the sidewall 12 thus preferably corresponds to the height of the screw head 3 and the inner diameter of the sidewall 12 preferably corresponds to the outer diameter of the screw head 3. While the present example shows a cavity that is designed to perfectly fit on the screw head 3 it is of course also possible to arrange a screw body with a screw head in the cavity 9, the screw head having a diameter or hight that is less than the diameter or hight of the cavity, so that a in particular small relative movement between screw head 3 and cover 4 is allowed. As long as the dimensions of the screw head 3 exceed the diameter of the central opening, which will be explained below, the cover 4 is safely fixed to the screw body 6 of the fastening screw 1.

The bottom wall 10 furthermore comprises a central opening 13 while the lid wall 11 comprises a central opening 14. According to the present example, the inner diameter of the central opening 13 is smaller than the diameter of the central opening 14. Consequently, the screw head 3 and the bottom wall 10 define a larger contact area than the screw head 3 and the lid wall 11.

The central opening 11 is designed such that under elastic deformation of the receptacle end 7 the screw head 3 may be pushed through the central opening 11 into the cavity 9. The central opening 13 is designed such that the threaded shaft 2 may be axially pushed through the central opening 13 without contact. In particular, the diameter of the central opening 13 is preferably designed larger than the largest outer diameter of the threaded shaft 2 such that a contactless arrangement of the threaded shaft 2 in the central opening 13 in radial direction is ensured. The mounting process of the cover 4 on the screw body 6 is therefore such that firstly the screw body 6 is guided with the free end of the threaded shaft 2 first through the central opening 11 in the lid wall 11 and subsequently the central opening 14 until the screw head 3 reaches the lid wall 11. Secondly, the screw head 3 is pushed through the central opening 14 by elastically deforming the receptacle end 7 such that the diameter of the central opening 14 increases until the screw head 3 is pushed through the lid wall 11 into the cavity 9. Once the screw head 3 has reached its position in the cavity 9, the elasticity of the cover 4 moves the lid wall 11 back into its untensed state where the diameter of the central opening 14 is smaller than the outer diameter of the screw head 3 such that the lid wall 11 contacts the screw head axially. The screw head 3 is then safely confined in the cavity 9 by the lid wall 11, the bottom wall 10 and the sidewalk well 12.

From the bottom wall 10 the tubular bellows 8 extends axially away from the cavity 9. The bellows 8 is arranged on the bottom wall 13 such that it is arranged coaxially to the central opening 13 and coaxially to the threaded shaft 2 or the screw body whose longitudinal or rotational axis 15 is also shown in figure 2. The bellows 8 comprises, according to the present example, two folding lines 16 and 17, each extending along the whole circumference of the tubular bellows 8. The folding lines 16 and 17 are arranged or designed parallel in axial distance to one another, whereby the diameter of the folding line 16 is greater than the diameter of the folding line 17 such that the tubular bellows 8 obtains in its longitudinal cross-section a zig zag shape that allows the bellows 8 to be axially pushed together or compressed or folded to shorten its longitudinal extension. In the untensed or unloaded state the tubular bellows 8 has a longitudinal extension L which - in the present example - is shorter than the axial extension of the threaded shaft 2 such that the tubular bellows 8 only covers a part of the threaded shaft 2. The remaining part of the threaded shaft 2 is therefore free and visible, so that during use a person may easily direct the fastening screw 1 with the threaded shaft 2 first to a respective screw hole. In other examples, the length L of the bellows 8 may essentially correspond to the length of the shaft 2.

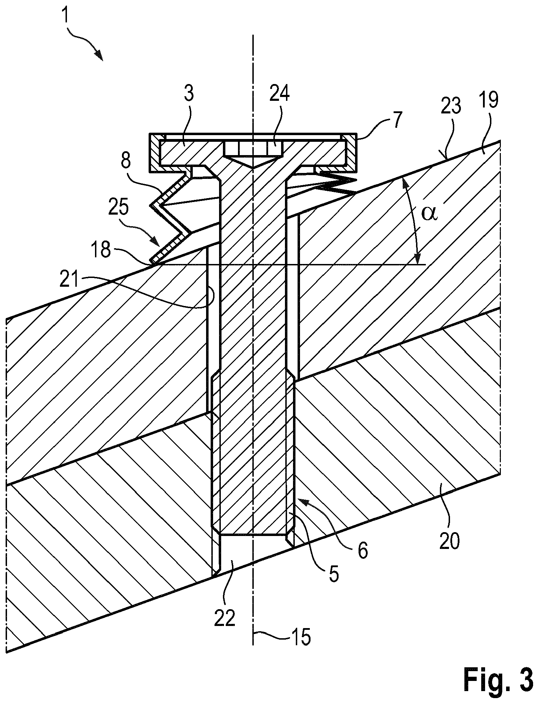

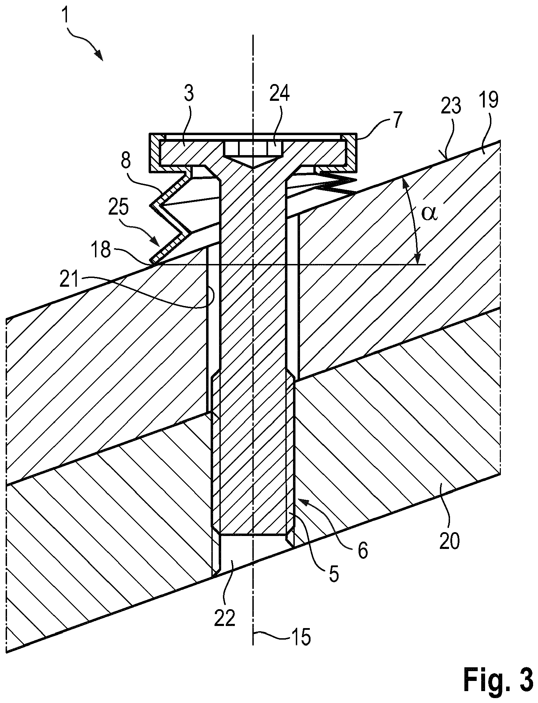

The free end of the bellows 8 forms a ring 18 that is designed to touch contact an object on which the fastening screw 1 is to be arranged. In figure 2 two objects 19 and 20 are also shown, which are to be connected or attached to one another by the fastening screw 1. The first object 19 comprises a through hole 21 with an inner diameter that is greater than the largest outer diameter of the threaded shaft 2. The second object 20 may comprise a counter winding 22 for the winding 5 of the threaded shaft 2, as shown in the example of figure 3. Alternatively, a screw nut 26 that comprises the counter winding 22 may be arranged on the side of the object 20 that is opposite to the object 19 and arranged at a further through hole 21 that is placed in the second object 20 in prolongation of the through hole 21 of the object 19, as shown in the example of figure 2. In order to attach the objects 19 and 20, for example body elements of a vehicle body, to one another, the fastening screw 1 is pushed through the opening 21 with the threaded shaft 1 first until the threaded shaft 2 reaches with its winding 5 the counter winding 22 which is either in the element 20 or in the above-mentioned screw nut. At this point, the screw 1 needs to be turned by applying a torque to the screw head 3 so that the winding 5 is mount into the counter winding 22 thereby pulling the fastening screw 1 into the counter winding 22 and the screw head 3 closer to the surface 23 of the element 19 facing the screw head 3.

For applying the torque, the screw head 3 may comprise a common recess 24, as it is used for slotted screws or cross slotted screws, for example. Also, the recess 24 may form a hexagon socket or the like as shown in figure 2. Since the lid wall 11 is opened by the central opening 14 the recess 24 is easily reachable for a tool through which torque may be applied to the fastening screw 1.

At one point, the free end 18 of the bellows 8 will touch contact the surface 23 of the first object 19. By further applying the torque to the fastening screw 1, the distance between the screw head 3 and the surface 23 is further reduced and thereby the tubular bellows 18 is compressed or folded along the folding lines 16, 17 such that its length L is reduced until the screw head 3 is pressed firmly against the surface 23 of the element 19. In this case, large parts of the tubular bellows 8 will be compressed and axially loaded between the screw head 3 and the object 19.

Once the fastening screw 1 is tightened, the screw head 3 presses against the object 19 such that the objects 19 and 20 are pressed against one another and thereby firmly attached to one another. The tubular bellows 8 acts as sealing element between the screw body and the object 19 such that no humid air, fluids or other disruptive elements such as dust particles or the like can reach the screw connection and particularly not the holes 21. If the object 20 is also provided with a through hole 21, as shown in figure 2, the sealing function of the bellows 8 ensures that no fluid or other elements can pass the screw connection through the objects 19, 20 so that, for example, fluids of humidity on the side of the screw head 3 cannot reach a room or space which is faced or enclosed by the object 20.

The advantageous design of the fastening screw 1 prohibits therefore corrosion on parts which are arranged on the opposite side of objects 19 and 20, on the screw head 3 or on the fastening screw itself. Therefore, the life expectancy of the screw connection and the apparatus, in which the screw connection is used, is prolonged.

The tubular bellows 8 has the further advantage that it may be folded or compressed unevenly. Figure 3 shows another example that in most parts corresponds to the example shown in figure 2 such for the further explanation the same reference signs will be used and only the differences will be explained.

In the second example, the holes 21 of the objects 19 and 20 are not arranged perpendicular to the surface 23 but in a tilted manner. According to the present example, the surface 23 is tilted in an angle of a = 18° to the axis of the fastening screw 1. The screw head 3 is thus no more arranged parallel to the surface 23 but also tilted. Due to the advantageous design of the tubular bellows 8, the sealing function is still ensured. By fastening the fastening screw 1, the bellows 8 is compressed a-symmetrically but remains in the sealing contact to the surface 23 with its free sealing ring 18 on its end. The bellows 8 therefore acts as adjustment element 25 which allows a safe sealing function of the cover 4 even if this fastening screw 1 is not arranged perpendicular to the surface 23 with which the screw head 3 interacts.

According to a further example the central opening 14 in the lid wall 11 is omitted, instead the lid wall 11 is a closed lid wall. In this case, the cover 4 may be arranged on the screw head 3 by pushing the screw head 3 through the tubular bellows 8 and the central opening 13 into the cavity 9 by elastic deformation of the cover.

### Reference list

- 1: fastening screw
- 2: threaded shaft
- 3: screw head
- 4: cover
- 5: winding
- 6: screw body
- 7: receptacle end
- 8: bellows
- 9: cavity
- 10: bottom wall
- 11: lid wall, central opening
- 12: sidewall
- 13: central opening
- 14: central opening
- 15: axis
- 16: folding line
- 17: folding line
- 18: ring
- 19: object
- 20: object
- 21: hole
- 22: counter winding
- 23: surface
- 24: recess
- 25: adjustment element
- 26: screw nut

## Claims

1. Cover (4) for a fastening screw (1) that comprises a screw head (3) and a threaded shaft (2) extending axially from the screw head (3), the cover (4) comprises a receptacle end (7) for accommodating the screw head (3) in a form-fitting manner and an elastically deformable adjustment element (25) that extends at least axially from the receptacle end (7), whereby the adjustment element (25) is a tubular bellows (8),whereby the receptacle end (7) comprises a cavity (9) for receiving the screw head (3) and that the cavity (9) comprises a bottom wall (10) with a central opening (13) through which the threaded shaft (2) is guidable, and whereby the tubular bellow (8) forms a sealing ring (18) on its free end for touch contacting a surface (23) of an object (19) to be fastened by the fastening screw (1) **characterised in that** the tubular bellows (8) extends directly from the bottom wall (10) away from the cavity (9).

2. Cover according to one of claim 1, **characterised in that** the tubular bellows (8) extends coaxially to the central opening (13) of the bottom wall (10).

3. Cover according to one of the preceding claims, **characterised in that** that the bellows (8) extends perpendicular from the bottom wall (10) in its un-tensed state.

4. Cover according to one of the preceding claims, **characterised in that** the tubular bellows (8) is designed in one piece with the receptacle end (7).

5. Cover according to one of the preceding claims, **characterised in that** the tubular bellows (8) comprises at least two, preferably at least three folding lines (16,17) that each extend in circumferential direction of the bellows (8).

6. Cover according to claim 6, **characterised in that** the at least two folding lines (16,17) are arranged parallel and axially distanced to one another.

7. Cover according to one of the preceding claims, **characterised in that** the cavity (9) of the receptacle end (7) comprises a lid wall (11) that extends parallel to the bottom wall (10), so that the screw head (3) may be axially fixed between the lid wall (11) and the bottom wall (10).

8. Cover according to one of the preceding claims, **characterised in that** that receptacle end (7) is elastically deformable.

9. Cover according claim 8, **characterised in that** the lid wall (11) comprises a central opening (14) through which the screw head (3) is pushable by elastic deformation of the receptacle end (7), in particular of the lid wall (11).

10. Cover according to claim 9, **characterised in that** the lid wall (11) is a closed lid wall (11) and that central opening (13) of the bottom wall (10) is designed such that the screw head (3) may be pushed through the central opening (13) of the bottom wall (10) into the cavity (9).

11. Fastening screw (1) for fastening at least two elements to each other, comprising a screw head (3) and a threaded shaft (2) extending axially from the screw head (3), whereby a cover (9) with an elastically deformable adjustment element (25) is attached to the screw head (3) in a form-fitting manner, **characterised in that** the cover (4) is designed according to one of claims 1 to 10.

12. Fastening screw according to claim 11, **characterised in that** the tubular bellows (8) extends from the receptacle end (7) coaxially to the threaded shaft (2) at least partially in the longitudinal extension of the threaded shaft (2).

## Patentansprüche

1. Abdeckung (4) für eine Befestigungsschraube (1), die einen Schraubenkopf (3) und einen sich axial von dem Schraubenkopf (3) erstreckenden Gewindeschaft (2) umfasst, wobei die Abdeckung (4) ein Aufnahmeende (7) zur formschlüssigen Unterbringung des Schraubenkopfs (3) und ein elastisch deformierbares Verstellelement (25) umfasst, das sich mindestens axial von dem Aufnahmeende (7) erstreckt, wobei das Verstellelement (25) ein rohrförmiger Balg (8) ist, wobei das Aufnahmeende (7) einen Hohlraum (9) zur Aufnahme des Schraubenkopfs (3) umfasst und der Hohlraum (9) eine Bodenwand (10) mit einer mittleren Öffnung (13) umfasst, durch die der Gewindeschaft (2) geführt werden kann, und wobei der rohrförmige Balg (8) an seinem freien Ende einen Dichtungsring (18) zum Berührungskontakt einer Fläche (23) eines mittels der Befestigungsschraube (1) zu befestigenden Gegenstands (19) bildet, **dadurch gekennzeichnet, dass** sich der rohrförmige Balg (8) direkt von der Bodenwand (10) und von dem Hohlraum (9) weg erstreckt.

2. Abdeckung nach einem des Anspruchs 1, **dadurch gekennzeichnet, dass** sich der rohrförmige Balg (8) koaxial zu der mittleren Öffnung (13) der Bodenwand (10) erstreckt.

3. Abdeckung nach einem der vorhergehenden Ansprüche, **dadurch gekennzeichnet, dass** sich der Balg (8) in seinem nicht gespannten Zustand senkrecht von der Bodenwand (10) erstreckt.

4. Abdeckung nach einem der vorhergehenden Ansprüche, **dadurch gekennzeichnet, dass** der rohrförmige Balg (8) einteilig mit dem Aufnahmeende (7) ausgelegt ist.

5. Abdeckung nach einem der vorhergehenden Ansprüche, **dadurch gekennzeichnet, dass** der rohrförmige Balg (8) mindestens zwei, vorzugsweise mindestens drei Faltlinien (16, 17) umfasst, die sich jeweils in Umfangsrichtung des Balgs (8) erstrecken.

6. Abdeckung nach Anspruch 6, **dadurch gekennzeichnet, dass** die mindestens zwei Faltlinien (16, 17) parallel und axial voneinander beabstandet angeordnet sind.

7. Abdeckung nach einem der vorhergehenden Ansprüche, **dadurch gekennzeichnet, dass** der Hohlraum (9) des Aufnahmeendes (7) eine Deckelwand (11) umfasst, die sich parallel zu der Bodenwand (10) erstreckt, so dass der Schraubenkopf (3) axial zwischen der Deckelwand (11) und der Bodenwand (10) fixiert werden kann.

8. Abdeckung nach einem der vorhergehenden Ansprüche, **dadurch gekennzeichnet, dass** das Aufnahmeende (7) elastisch deformierbar ist.

9. Abdeckung nach Anspruch 8, **dadurch gekennzeichnet, dass** die Deckelwand (11) eine mittlere Öffnung (14) umfasst, durch die der Schraubenkopf (3) durch elastische Deformierung des Aufnahmeendes (7), insbesondere der Deckelwand (11), geschoben werden kann.

10. Abdeckung nach Anspruch 9, **dadurch gekennzeichnet, dass** die Deckelwand (11) eine geschlossene Deckelwand (11) ist und dass die mittlere Öffnung (13) der Bodenwand (10) so ausgelegt ist, dass der Schraubenkopf (3) durch die mittlere Öffnung (13) der Bodenwand (10) in den Hohlraum (9) geschoben werden kann.

11. Befestigungsschraube (1) zur Befestigung mindestens zweier Elemente aneinander, umfassend einen Schraubenkopf (3) und einen sich axial von dem Schraubenkopf (3) erstreckenden Gewindeschaft (2), wobei eine Abdeckung (9) mit einem elastisch deformierbaren Verstellelement (25) formschlüssig an dem Schraubenkopf (3) angebracht ist, **dadurch gekennzeichnet, dass** die Abdeckung (4) nach einem der Ansprüche 1 bis 10 ausgelegt ist.

12. Befestigungsschraube (1) nach Anspruch 11, **dadurch gekennzeichnet, dass** sich der rohrförmige Balg (8) von dem Aufnahmeende (7) mindestens teilweise in der Längserstreckung des Gewindeschafts (2) koaxial zu dem Gewindeschaft (2) erstreckt.

## Revendications

1. Cache (4) pour une vis de fixation (1) qui comprend une tête de vis (3) et une tige filetée (2) s'étendant axialement à partir de la tête de vis (3), le cache (4) comprenant une extrémité de réception (7) pour loger la tête de vis (3) par complémentarité de forme et un élément d'ajustement élastiquement déformable (25) qui s'étend au moins axialement à partir de l'extrémité de réception (7), l'élément d'ajustement (25) étant un soufflet tubulaire (8), l'extrémité de réception (7) comprenant une cavité (9) pour recevoir la tête de vis (3) et la cavité (9) comprenant une paroi inférieure (10) dotée d'une ouverture centrale (13) à travers laquelle la tige filetée (2) peut être guidée, et le soufflet tubulaire (8) formant un anneau d'étanchéité (18) sur son extrémité libre pour entrer en contact effleurant avec une surface (23) d'un objet (19) devant être fixé par la vis de fixation (1), **caractérisé en ce que** le soufflet tubulaire (8) s'étend directement à partir de la paroi inférieure (10) en s'éloignant de la cavité (9).

2. Cache selon l'une de la revendication 1, **caractérisé en ce que** le soufflet tubulaire (8) s'étend coaxialement vers l'ouverture centrale (13) de la paroi inférieure (10) .

3. Cache selon l'une des revendications précédentes, **caractérisé en ce que** le soufflet (8) s'étend perpendiculairement à la paroi inférieure (10) dans son état non tendu.

4. Cache selon l'une des revendications précédentes, **caractérisé en ce que** le soufflet tubulaire (8) est conçu d'un seul tenant avec l'extrémité de réception (7).

5. Cache selon l'une des revendications précédentes, **caractérisé en ce que** le soufflet tubulaire (8) comprend au moins deux, de préférence au moins trois lignes de pli (16, 17) qui s'étendent chacune dans la direction circonférentielle du soufflet (8).

6. Cache selon la revendication 6, **caractérisé en ce que** les au moins deux lignes de pli (16, 17) sont disposées de manière parallèle et distantes axialement entre elles.

7. Cache selon l'une des revendications précédentes, **caractérisé en ce que** la cavité (9) de l'extrémité de réception (7) comprend une paroi formant couvercle (11) qui s'étend parallèlement à la paroi inférieure (10), de sorte que la tête de vis (3) peut être immobilisée axialement entre la paroi formant couvercle (11) et la paroi inférieure (10).

8. Cache selon l'une des revendications précédentes, **caractérisé en ce que** l'extrémité de réception (7) est élastiquement déformable.

9. Cache selon la revendication 8, **caractérisé en ce que** la paroi formant couvercle (11) comprend une ouverture centrale (14) à travers laquelle la tête de vis (3) peut être poussée par déformation élastique de l'extrémité de réception (7), en particulier de la paroi formant couvercle (11).

10. Cache selon la revendication 9, **caractérisé en ce que** la paroi formant couvercle (11) est une paroi formant couvercle (11) fermée et **en ce que** l'ouverture centrale (13) de la paroi inférieure (10) est conçue de sorte que la tête de vis (3) peut être poussée à travers l'ouverture centrale (13) de la paroi inférieure (10) jusque dans la cavité (9).

11. Vis de fixation (1) pour fixer au moins deux éléments entre eux, comprenant une tête de vis (3) et une tige filetée (2) s'étendant axialement à partir de la tête de vis (3), un cache (9) doté d'un élément d'ajustement élastiquement déformable (25) étant fixé à la tête de vis (3) par complémentarité de forme, **caractérisée en ce que** le cache (4) est conçu selon l'une des revendications 1 à 10.

12. Vis de fixation selon la revendication 11, **caractérisée en ce que** le soufflet tubulaire (8) s'étend à partir de l'extrémité de réception (7) coaxialement à la tige filetée (2) au moins partiellement sur l'étendue longitudinale de la tige filetée (2).
